# EUROPEAN PATENT SPECIFICATION

(11) **EP 3 110 758 B1**
(45) Date of publication and mention of the grant of the patent: **11.04.2018**
(21) Application number: 15706480.9
(22) Date of filing: 26.02.2015
(51) Int. Cl.: C01B 33/193, C08K 3/36, C09C 1/30, C08K 9/04, C08L 9/06

(54) **PROCESS FOR THE PREPARATION OF PRECIPITATED SILICAS, PRECIPITATED SILICAS AND THEIR USES, IN PARTICULAR FOR THE REINFORCEMENT OF POLYMERS**
VERFAHREN ZUR HERSTELLUNG VON FÄLLUNGSKIESELSÄURE, FÄLLUNGSKIESELSÄURE UND DEREN VERWENDUNG, INSBESONDERE ZUR VERSTÄRKUNG VON POLYMEREN
PROCÉDÉ DE PRÉPARATION DE SILICES PRÉCIPITÉES, SILICES PRÉCIPITÉES ET LEURS UTILISATION, NOTAMMENT POUR LE RENFORCEMENT DE POLYMÈRES

(30) Priority: 28.02.2014 EP 14305291; 28.02.2014 EP 14305293
(43) Date of publication of application: 04.01.2017
(73) Proprietor: Rhodia Operations, 75009 Paris (FR)
(72) Inventor: GUY, Laurent, F-69140 Rillieux-la-Pape (FR); NEVEU, Sylvaine, F-75005 Paris (FR); BOIVIN, Cédric, F-69380 Chasselay (FR); PERIN, Eric, F-69400 Villefranche sur Saône (FR); PINAULT, Anne-Laure, F-94260 Fresnes (FR)
(74) Representative: Ferri, Isabella
(86) International application number: PCT/EP2015/053988
(87) International publication number: WO 2015/128402

(56) References cited:
- WO-A1-2014/033300
- DE-A1-102008 017 747
- US-A- 5 403 570
- US-A1- 2009 214 449
- US-A1- 2013 156 674

## Description

The present invention relates to readily dispersible precipitated silica, to a process for the manufacture thereof and the use thereof in elastomer or vulcanizable rubber mixtures.

Precipitated silica has long been used as reinforcing filler for elastomers, in particular for use in tires.

According to a general process, precipitated silica is prepared by means of a reaction whereby a silicate, such as the silicate of an alkaline metal, for instance sodium silicate, is precipitated with an acidifying agent, such as sulfuric acid, followed by separation of the resulting solid by filtration. A filter cake is thus obtained which is generally submitted to a liquefaction operation before being dried, generally by atomization. Several methods can be employed for the precipitation of silica: notably, the addition of an acidifying agent to a sediment of the silicate, or simultaneous addition, partial or total, of an acidifying agent and of the silicate to water or to a silicate sediment already present in the vessel.

In order to produce optimal reinforcing properties from a filler, the latter must be present in the elastomer matrix in a form which is as finely divided as possible and distributed as homogeneously as possible.

When incorporating precipitated silica in polymers, it is also important to optimize the viscosity behaviour during compounding and the dynamic properties of the product without detrimentally influencing the mechanical properties of the blend of polymer and filler.

Furthermore, silicas are polar and therefore have generally only a poor phase compatibility with the non-polar polymers in the rubber compound. The dispersion occurs on the basis of the silica aggregates.

EP647591A describes a process for the production of precipitated silica with a certain set of physicochemical parameters.

EP901986A describes precipitated silica characterized inter alia by a parameter wk (as hereinafter defined) representing a parameter defined by the particle size distribution of the product.

EP 983966A describes a precipitated silica with a maximum value for the same parameter wk as defined in EP 901986A combined with a certain content of Al in the product. There is no detailed information as to the point in time of addition of the Al and, while liquefaction (commonly referred to as disintegration) of the filter cake obtained is mentioned in the specification, but not actually used.

EP1513768A, EP1525157A, EP1525159A, EP1585704A, EP1590297A, EP1762544A and EP2262730A disclose precipitated silica, which silica is said to be suitable as reinforcing filler in elastomers.

US6335396 discloses precipitated silica useful for use in elastomer blends for tires. The silica is, inter alia, characterized by a certain pore volume distribution V₂/V₁ where V₂ is the volume of pores having a diameter in the range of from 175 to 275 Å and V₁ is the total volume of the pores having diameters less than or equal to 400 Å (as defined in more detail hereinafter).

Precipitated silica for use as reinforcing fillers for elastomers are also disclosed in US5403570, US5882617 and in US2005/0032965.

US2009/0214449 (WO2006/125927) describes a process for the preparation of a precipitated silica or of a precipitated silica suspension comprising mixing a carboxylic acid with or adding same to the filter cake resulting from the precipitation of the silica, before or during a disintegration or liquefaction of the filter cake.

Despite the efforts to improve the properties of the precipitated silica for use in elastomer compositions in the prior art, the products are still not fully satisfactory and further improvement is desirable.

It was thus an object of the present invention to provide precipitated silica for use in elastomer compositions, in particular elastomer compositions which are used in the production of tires which provide a good balance of mechanical and dynamical properties, in particular as far as rheological behaviour during compounding is concerned.

This object is achieved with the precipitated silica in accordance with claim 1.

Preferred embodiments are set forth in the dependent claims.

The invention furthermore concerns processes for the manufacture of the precipitated silicas in accordance with the present invention, the use of the silicas in accordance with the present invention in elastomer compositions, in particular for tire applications, and articles of manufacture obtained from such compositions.

In accordance with a first embodiment of the present invention, a precipitated silica with the following parameters is provided:
i) a BET specific surface in the range of from 35 to 700 m²/g,
ii) a CTAB specific surface in the range of from 30 to 400 m²/g,
ii) a pore volume distribution V₂/V₁ in the range of from 0.15 to 0.49, and
iv) a content of polycarboxylic acid and/or corresponding carboxylate groups, expressed as total carbon content, of at least 0.15 wt%, wherein said polycarboxylic acid is selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid.

The pore volume distribution V2/V1 represents the ratio of the pore volume generated by the pores having a diameter of between 175 and 275 Å (V2) to the pore volume generated by the pores pores having diameters of less than or equal to 400 Å. The latter volume corresponds to the useful pore volume of the fillers employed in the reinforcement of elastomers.

The pore volumes and pore diameters are typically measured by mercury (Hg) porosimetry using a Micromeritics Autopore 9520 porosimeter and are calculated by the Washburn relationship with a contact angle theta equal to 130° and a surface tension gamma equal to 484 dynes/cm (standard DIN 66133). Each sample is pre-dried in an oven at 200°C for 2 hours before measurement is carried out.

The precipitated silica according to the invention can be provided in any physical state, that is to say that it can be provided in the form of substantially spherical beads (microbeads), of a powder or of granules.

It can thus be provided in the form of substantially spherical beads with a mean size of at least 80 µm, preferably of at least 150 µm, in particular of between 150 and 270 µm; this mean size is determined according to the standard NF X 11507 (December 1970) by dry sieving and determination of the diameter corresponding to a cumulative oversize of 50%.

It can also be provided in the form of a powder with a mean size of at least 3 µm, in particular of at least 10 µm, preferably of at least 15 µm.

It can be provided in the form of granules with a size of at least 1 mm, for example of between 1 and 10 mm, in particular along the axis of their greatest dimension.

The carboxylic acid or carboxylate groups are preferably derived from polycarboxylic acids. Mixtures of polycarboxylic acids can be used in accordance with further preferred embodiments.

The precipitated silica according to the invention exhibits a total content (C) of polycarboxylic acids or their mixtures and/or of the corresponding carboxylates, expressed as total carbon, of at least 0.15% by weight, in particular of at least 0.20% by weight. The content (C) of polycarboxylic acids and/or corresponding carboxylates can be of at least 0.25% by weight, in particular of at least 0.30% by weight, for example of at least 0.35% by weight, indeed even of at least 0.45% by weight. The content (C) of polycarboxylic acids and/or corresponding carboxylates, expressed as total carbon is not particularly limited, although it typically does not exceed 10.00% weight, in particular it does not exceed 5.00% by weight.

In any of the polycarboxylic acids, a part or the totality of the carboxylic acid functional groups may be in the form of a carboxylic acid derivative, namely in the form of an anhydride, ester, or salt, for instance the salt of an alkaline metal (e.g. sodium or potassium) or an ammonium salt. The term "carboxylate" will be used hereinafter to indicate the derivatives of the carboxylic acid functional groups as defined above.

The total content of polycarboxylic acids or their mixtures and/or of the corresponding carboxylates, denoted (C), expressed as total carbon, can be measured using a carbon/sulfur analyzer, such as the Horiba EMIA 320 V2. The principle of the carbon/sulfur analyzer is based on the combustion of a solid sample in a stream of oxygen in an induction furnace (adjusted to approximately 170 mA) and in the presence of combustion accelerators (approximately 2 grams of tungsten (in particular Lecocel 763-266) and approximately 1 gram of iron).

The carbon present in the sample to be analyzed (weight of approximately 0.2 gram) combines with the oxygen to form CO₂, CO. These gases are subsequently analyzed by an infrared detector.

The moisture from the sample and the water produced during these oxidation reactions is removed by passing over a cartridge comprising a dehydrating agent (magnesium perchlorate) in order not to interfere with the infrared measurement.

The result is expressed as percentage by weight of element carbon.

The presence of the polycarboxylic acids and/or of the corresponding carboxylates at the surface of the inventive precipitated silica can be determined by the presence of shoulders characteristic of the C-O and C=O bonds, visible in the infrared spectra, obtained in particular by surface (transmission) infrared or diamond-ATR infrared (in particular between 1540 and 1590 cm⁻¹ and between 1380 and 1420 cm⁻¹ for C-O, and between 1700 and 1750 cm⁻¹ for C=O).

The surface infrared analysis (by transmission) may be carried out on a Bruker Equinox 55 spectrometer on a pellet of pure product. The pellet is typically obtained after grinding the silica as is in an agate mortar and pelleting at 2 T/cm² for 10 seconds. The diameter of the pellet is generally 17 mm. The weight of the pellet is between 10 and 20 mg. The pellet thus obtained is placed in the high vacuum chamber (10⁻⁷ mbar) of the spectrometer for one hour at ambient temperature before the analysis by transmission. Acquisition takes place under high vacuum (acquisition conditions: from 400 cm⁻¹ to 6000 cm⁻¹; number of scans: 100; resolution: 2 cm⁻¹).

The diamond-ATR analysis may be carried out on a Bruker Tensor 27 spectrometer, and it consists in depositing, on the diamond, a spatula tip of pre-ground silica in an agate mortar and in then exerting a pressure. The infrared spectrum is recorded on the spectrometer in 20 scans, from 650 cm⁻¹ to 4000 cm⁻¹. The resolution is 4 cm⁻¹.

The term "polycarboxylic acid" is used herein to refer to carboxylic acids comprising at least two carboxylic acid functional groups. The expression "carboxylic acid functional group" is used herein in its customary meaning, to refer to the -COOH functional group.

Polycarboxylic acids suitable for the precipitated silica of the invention may have two, three, four or even more than four carboxylic acid functional groups. Preferably, the polycarboxylic acids suitable for the precipitated silica of the invention are selected from the group consisting of the dicarboxylic acids and the tricarboxylic acids.

Suitable polycarboxylic acids are linear or branched, saturated or unsaturated, aliphatic polycarboxylic acids having from 2 to 20 carbon atoms and aromatic polycarboxylic acids. The polycarboxylic acids may optionally comprise hydroxy functional groups and/or halogen atoms.

Aliphatic polycarboxylic acids may optionally comprise heteroatoms in the main chain, e.g. N, S.

Typically, the polycarboxylic acids are selected from the group consisting of the linear or branched, saturated or unsaturated, aliphatic polycarboxylic acids and aromatic polycarboxylic acids having from 2 to 16 carbon atoms.

Among the aliphatic polycarboxylic acids mention may be made of the linear polycarboxylic acids, saturated or unsaturated, having from 2 to 14 carbon atoms, preferably having from 2 to 12 carbon atoms. Suitable polycarboxylic acids may have 2, 3, 4, 5, 6, 7, 8, 9, 10, 11 or 12 carbon atoms. Suitable polycarboxylic acids may advantageously have 4, 5, 6, 7, 8, 9 or 10 carbon atoms, preferably 4, 5, 6, 7, or 8 carbon atoms. For instance the polycarboxylic acid may have 4, 5 or 6 carbon atoms.

Notable, non-limiting examples of suitable linear aliphatic polycarboxylic acids are the acids selected from the group consisting of oxalic acid, malonic acid, tricarballylic acid, succinic acid, glutaric acid, adipic acid, pimelic acid, suberic acid, azelaic acid, sebacic acid.

Among branched polycarboxylic acids mention may be made of methylsuccinic acid, ethylsuccinic acid, oxalosuccinic acid, methyladipic acid, methylglutaric acid, dimethylglutaric acid. For the avoidance of doubt, the expression "methylglutaric acid" is used herein to indicate both 2-methylglutaric acid and 3-methylglutaric acid, as well as mixtures of the two isomers in any proportion. The expression "2-methylglutaric acid" is used herein to indicate both the (S) and (R) forms of the compound as well as their racemic mixture.

Among the unsaturated polycarboxylic acids mention may be made of maleic acid, fumaric acid, itaconic acid, muconic acid, aconitic acid, traumatic acid, glutaconic acid.

Among polycarboxylic acids comprising hydroxyl functional groups mention may be made of malic acid, citric acid, isocitric acid, tartaric acid.

Aromatic polycarboxylic acids typically have from 6 to 20 carbon atoms. Among the aromatic polycarboxylic acids, mention may be made of the phthalic acids, namely phthalic acid, orthophthalic acid and isophthalic acid, trimesic acid, trimellitic acid.

Preferably the polycarboxylic acids for the invention are selected from the group consisting of oxalic acid, malonic acid, tricarballylic acid, succinic acid, glutaric acid, adipic acid, pimelic acid, suberic acid, azelaic acid, sebacic acid, methylsuccinic acid, ethylsuccinic acid, methyladipic acid, methylglutaric acid, dimethylglutaric acid, malic acid, citric acid, isocitric acid and tartaric acid.

The polycarboxylic acids may be conveniently selected from the group consisting of adipic acid, succinic acid, ethylsuccinic acid, glutaric acid, methylglutaric acid, oxalic acid and citric acid.

Alternatively, the polycarboxylic acids may be selected from the group consisting of oxalic acid, malonic acid, tricarballylic acid, succinic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid. Preferably, the polycarboxylic acids may be selected from the group consisting of oxalic acid, malonic acid, succinic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid, citric acid, isocitric acid and tartaric acid. Even more preferably the polycarboxylic acids may be selected from the group consisting of succinic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid, citric acid, isocitric acid, tartaric acid.

The polycarboxylic acids may be selected from the group consisting of succinic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid.

In accordance with a preferred embodiment, the precipitated silica of the present invention comprises at least two polycarboxylic acids as defined above, that is a mixture of at least two polycarboxylic acids. The mixture may comprise two, three, four or even more than four polycarboxylic acids. Typically, the mixture comprises two polycarboxylic acids. Preferably, the mixture comprises three polycarboxylic acids as defined above. More preferably, the mixture comprises three polycarboxylic acids selected from the group consisting of the dicarboxylic acids and the tricarboxylic acids.

In an advantageous embodiment, the mixture comprises three polycarboxylic acids, preferably three dicarboxylic acids. Typically, the mixture consists of three dicarboxylic acids, although impurities may be present in an amount typically not exceeding 2.00 wt% of the total mixture of polycarboxylic acids.

In a first aspect of said embodiment, the mixture comprises adipic acid, glutaric acid and succinic acid. The three acids may be present in the mixture in any proportion.

Typically, the amount of adipic acid in the mixture is equal to or greater than 15.00 wt%, preferably equal to or greater than 20.00 wt%; the amount of adipic acid is generally equal to or less than 35.00 wt%, preferably equal to less than 30.00 wt%.

The amount of glutaric acid is typically equal to or greater than 40.00 wt%, preferably equal to or greater than 45.00 wt% and equal to or less than 65.00 wt%, preferably equal to or less than 60.00 wt%.

The amount of succinic acid in the mixture is equal to or greater than 13.00 wt%, preferably equal to or greater than 15.00 wt% and equal to or less than to 28.00 wt%, preferably equal to or less than 25.00 wt%. The percentages are referred to the total amount of polycarboxylic acids in the mixture. Such a mixture may advantageously be obtained from a process for the manufacture of adipic acid.

In a second aspect of said embodiment, the mixture comprises methylglutaric acid, ethylsuccinic acid and adipic acid. The three acids may be present in the mixture in any proportion.

Preferably, the mixture comprises a major proportion of methylglutaric acid with respect to the total combined weight of ethylsuccinic acid and adipic acid. Typically, the amount of methylglutaric acid in the mixture is at least 50.00 wt%; preferably it is equal to or greater than 60.00 wt%, more preferably equal to or greater than 80.00 wt%, more preferably equal to or greater than 90.00 wt%. The amount of methylglutaric acid in the mixture is equal to or less than 97.00 wt%, preferably equal to less than 96.00 wt%, more preferably equal to less than 95.50 wt%.

The amount of ethylsuccinic acid is generally equal to or greater than 3.00 wt%, preferably equal to or greater than 3.50 wt%, more preferably equal to or greater than 3.90 wt% and equal to or less than 20.00 wt%, preferably equal to or less than 12.00 wt%, more preferably equal to or less than 9.70 wt%.

The amount of adipic acid in the mixture is equal to or greater than 0.05, preferably equal to or greater than 0.08 wt%, more preferably equal to or greater than 0.10 wt% and equal to or less than to 20.00 wt%, preferably equal to or less than 10.00 wt%, more preferably equal to or less than 5.00 wt%.

The methylglutaric acid in the mixture may be 2-methylglutaric acid. Alternatively, the methylglutaric acid may be 3-methylglutaric acid. Still alternatively, the methylglutaric acid in the mixture may be a mixture of 2-methylglutaric acid and 3-methylglutaric acid, in any proportion of the two.

The mixture of polycarboxylic acids defined above may advantageously be obtained by hydrolysis, acid or basic, of a mixture comprising methylglutaronitrile, ethylsuccinonitrile and adiponitrile. Said mixture may conveniently derive from the process of preparation of adiponitrile by hydrocyanation of butadiene as known in the art.

Thus, in a first embodiment, the mixture of polycarboxylic acids used in the invention may comprise:
- methylglutaric acid, typically from 60.00 to 96.00 wt%, for instance from 90.00 to 95.50 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In an alternative, advantageous composition the mixture of polycarboxylic acids used in the invention may comprise:
- methylglutaric acid, typically from 10.00 to 50.00 wt%, for instance from 25.00 to 40.00 wt%;
- methylglutaric anhydride, typically from 40.00 to 80.00 wt%, for instance from 55.00 to 70.00 wt%;
- ethylsuccinic anhydride, typically from 3.50 to 20.00 wt%, for instance from 3.90 to 9.70 wt%; and
- adipic acid, typically from 0.05 to 20.00 wt%, for instance from 0.10 to 0.30 wt%.

In the above composition methylglutaric anhydride may be 2-methylglutaric anhydride, 3-methylglutaric anhydride or a mixture of the two.

The polycarboxylic acids used in the invention may optionally be neutralised, for instance by reaction with a base such as NaOH or KOH, before being used in the inventive process. This allows modifying the pH of the resulting silica.

A part or the totality of the carboxylic acid functional groups may be in the form of a carboxylic acid derivative, namely in the form of an anhydride, ester, or salt, for instance the salt of an alkaline metal (e.g. sodium or potassium) or an ammonium salt. The term "carboxylate" will be used hereinafter to indicate the derivatives of the carboxylic acid functional groups as defined above.

The precipitated silica in accordance with the present invention has a BET specific surface in the range of from 35 to 700, preferably of from 35 to 350 and particularly preferred of from 70 to 300 m²/g.

The BET specific surface is determined according to the Brunauer - Emmett - Teller method described in The Journal of the American Chemical Society, Vol. 60, page 309, February 1938, and corresponding to the standard NF ISO 5794-1, Appendix D (June 2010).

The CTAB specific surface of the precipitated silica in accordance with the present invention is within the range of from 30 to 400, preferably of from 80 to 350 and particularly preferred of from 100 to 310 m²/g.

The CTAB specific surface is the external surface, which can be determined according to the standard NF ISO 5794-1, Appendix G (June 2010).

The precipitated silica in accordance with the present invention has a DBP oil uptake preferably in the range of from 140 to 350 ml/100g, more preferably of from 160 to 320 ml/100g and particularly preferred of from 180 to 300 ml/100g.

The DBP oil uptake is determined in accordance with ASTM D 6854.

In accordance with another preferred embodiment the precipitate silica has a DBP oil uptake in the range of from 150 to 350 ml/100g, preferably of from 180 to 320 ml/100g and particularly preferred of from 200 to 300 ml/100g.

In accordance with still another preferred embodiment of the present invention, the precipitated silica has an aluminium content, measured as Al₂O₃, in the range of from 0.10 to 5.00 wt%, preferably of from 0.15 to 3.00 wt%.

The content of aluminium, denoted (Al), can be determined by wavelength dispersive X-ray fluorescence, for example with a Panalytical 2400 spectrometer or, preferably, with a Panalytical MagixPro PW2540 spectrometer. The Al determination by X-ray fluorescence is typically carried out on homogeneous powder of the precipitated silica, obtained for instance by grinding granules of the precipitated silica. The powder is analyzed as is in a vessel having a diameter of 40 mm with a polypropylene film with a thickness of 6 µm, under a helium atmosphere, at an irradiation diameter of 37 mm, the amount of silica analyzed is 9 cm³. The measurement of the aluminium content, is obtained from the Kα line (2θ angle = 145°, PE002 crystal, 550 µm collimator, gas flow detector, rhodium tube, 32 kV and 125 mA). The intensity of this line is proportional to the aluminium content.

Depending on the intended final use, the addition of an Al compound may be advantageous or not.

In accordance with another object of the present invention there is provided a process for the production of precipitated silica comprising the steps of:
- reacting at least one silicate with at least one acidifying agent, to provide a silica suspension;
- submitting said silica suspension to filtration to provide a filter cake;
- submitting said filter cake to a liquefaction step, said liquefaction step being carried out with or without the addition of an aluminium compound, to obtain a suspension of precipitated silica; and
- optionally, drying the precipitated silica obtained after the liquefaction step; wherein at least one polycarboxylic acid is added to the filter cake during or after the liquefaction step, wherein step a) is performed by precipitating a silicate with a mineral acid at a temperature of from 55 to 95 °C at a pH in the range of from 7 to 14 under continuous stirring until a solids content in the suspension of from 40 to 110 g/l is achieved, thereafter reducing the pH to a value below 5 by the addition of an acid; and wherein the at least one polycarboxylic acid is selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid.

According to this process of the invention, the filter cake undergoes a liquefaction step during which, or after which, at least one polycarboxylic acid, or a mixture of polycarboxylic acids is added to the filter cake. The liquefaction step is carried out with or without the addition of an aluminium compound to the filter cake. The filter cake thus obtained, usually exhibits a solids content of at most 30 wt%, preferably of at most 25 wt%.

The amount of the at least one polycarboxylic acid calculated with respect to the amount of silica (expressed in terms of SiO₂) in the product at the time of addition, is generally of at least 0.50 wt%, even of at least 0.60 wt%, preferably of at least 0.70 wt%, more preferably at least 0.75 wt%. The amount of polycarboxylic acid or mixtures thereof typically does not exceed 2.50 wt%, preferably 2.00 wt%, more preferably 1.75 wt%, and even more preferably it does not exceed 1.50 wt%, with respect to the amount of silica (expressed in terms of SiO₂) in the product at the time of addition. The amount of polycarboxylic acid or mixtures thereof added may typically be in the range from 0.50 wt% to 2.00 wt%, even from 0.60 wt% to 1.75 wt% with respect to the amount of silica (expressed in terms of SiO₂) in the filter cake.

The aforementioned amounts of the at least one polycarboxylic acid yield the amount of carboxylic acid and/or carboxylate groups in the final product of at least 0.15 wt% as required in accordance with claim 1.

The term "liquefaction" is intended herein to indicate a process wherein a solid, namely the filter cake, is converted into a fluid-like mass. The expressions "liquefaction step", "liquefaction operation" or "disintegration" are interchangeably intended to denote a process either mechanical, chemical or both, wherein the filter cake is transformed into a flowable suspension, which can then be easily dried. After the liquefaction step the filter cake is in a flowable, fluid-like form and the precipitated silica is in suspension.

The liquefaction step may generally comprise a mechanical treatment which results in a reduction of the granulometry of the silica in suspension. Said mechanical treatment may be carried out by passing the filter cake through a colloidal-type mill or a ball mill. The mixture which is obtained after the liquefaction step is hereinafter referred to as "suspension of precipitated silica". The at least one polycarboxylic acid may be added to the filter cake during or after the mechanical treatment has taken place.

The filter cake subjected to the liquefaction step may be a mixture of more than one filter cake, each one obtained from the filtration of a silica suspension, or a part of the silica suspension, obtained from the precipitation step. The filter cake may optionally be washed or rinsed before the liquefaction step.

The precipitated silica suspension obtained at the end of the liquefaction step is typically dried. Drying may be carried out using any means known in the art. Preferably, drying is carried out by spray drying. For this purpose, any suitable type of spray dryer may be used, especially a turbine spray dryer or a nozzle spray dryer (liquid-pressure or two-fluid nozzle). In general, when the filtration is carried out by means of a filter press, a nozzle spray dryer is used, and when the filtration is carried out by means of a vacuum filter, a turbine spray dryer is used.

When a nozzle spray dryer is used, the precipitated silica is usually in the form of approximately spherical beads.

After drying, a milling step may then be carried out on the recovered product. The precipitated silica that can then be obtained is generally in the form of a powder.

When a turbine spray dryer is used, the precipitated silica is typically in the form of a powder.

The dried precipitated silica (especially by a turbine spray dryer) or milled as indicated above, may optionally be subjected to an agglomeration step. Said agglomeration step consists, for example, of direct compression, wet granulation (that is to say with the use of a binder such as water, a silica suspension, etc.), extrusion or, preferably, dry compacting. The silica that can then be obtained after the agglomeration step is generally in the form of granules.

The choice of the acidifying agent and of the silicate is made in a way well known in the art. Use is generally made, as acidifying agent, of a strong inorganic acid, such as sulfuric acid, nitric acid or hydrochloric acid. Alternatively, an organic acid, such as acetic acid, formic acid or carbonic acid may also be used in this step of the process.

The acidifying agent can be dilute or concentrated; the acid concentration can be between 0.4 and 36.0N, for example between 0.6 and 1.5N.

In particular, in the case where the acidifying agent is sulfuric acid, its concentration can be between 40 and 180 g/l, for example between 60 and 130 g/l.

Any common form of silicate may be used in the process, such as metasilicates, disilicates and advantageously an alkali metal silicate, in particular sodium or potassium silicate.

The silicate initially present in the vessel conventionally has a concentration (expressed in terms of SiO₂) of between 40 and 330 g/l, for example between 60 and 300 g/l.

Preferably, the silicate is sodium silicate. When sodium silicate is used, it generally exhibits a ratio SiO₂/Na₂O by weight of between 2.0 and 4.0, in particular between 2.4 and 3.9, for example between 3.1 and 3.8.

In accordance with yet another embodiment of the process in accordance with the present invention, a silicate and an electrolyte are initially charged in an appropriate reaction vessel. The amount of silicate initially present in the vessel advantageously represents only a portion of the total amount of silicate involved in the reaction.

The term "electrolyte" is understood in the present specification as normally accepted, that is to say that it means any ionic or molecular substance which, when in solution, decomposes or dissociates to form ions or charged particles. As suitable electrolytes mention may be made of alkali metals and alkaline earth metals salts, in particular the salt of the starting silicate metal and of the acidifying agent, for example sodium chloride in the case of the reaction of a sodium silicate with hydrochloric acid or, preferably, sodium sulfate in the case of the reaction of a sodium silicate with sulfuric acid.

In an advantageous embodiment, an inventive composition comprises precipitated silica and at least one of the polycarboxyilic acids selected from the group consisting of adipic acid, succinic acid and methylglutaric acid, in the acid form and/or in the carboxylate form.

In an advantageous embodiment, the inventive composition comprises precipitated silica and adipic acid in the acid form and/or in the carboxylate form, glutaric acid in the acid form and/or in the carboxylate form, and succinic acid in the acid form and/or in the carboxylate form. The adipic, glutaric and succinic acid and/or acid carboxylate are preferably present on the surface of the precipitated silica.

In another advantageous embodiment, the inventive composition comprises precipitated silica and methylglutaric acid in the acid form and/or in the carboxylate form, ethylsuccinic acid in the acid form and/or in the carboxylate form, and adipic acid in the acid form and/or in the carboxylate form. The methylglutaric acid, the ethylsuccinic acid and the adipic acid and/or acid carboxylate are preferably present on the surface of the precipitated silica.

Advantageously, the precipitated silica according to the present invention or obtained by the process according to the invention described above confer to the polymeric (elastomeric) compositions into which they are introduced, a highly satisfactory compromise in properties, in particular a reduction in their viscosity. Preferably, they exhibit a good ability to disperse and to deagglomerate in polymeric, preferably elastomeric, compositions.

In the following, a number or preferred precipitated silicas in accordance with the present invention are described.

A first preferred group of precipitated silicas in accordance with the present invention has a BET specific surface in the range of from 120 to 300 m²/g and a CTAB specific surface of from 100 to 300 m²/g and a ratio BET specific surface/CTAB specific surface in the range of from 0.8 to 1.3. The ratio of BET to CTAB indicates a low microporosity.

A particularly preferred group of precipitated silicas is characterized by the following set of parameters:
- BET specific surface 35-350 m²/g;
- CTAB specific surface of from 30 to 350 m²/g;
- DBP oil uptake in the range of from 150 to 300 ml/100g;
- ratio BET specific surface/CTAB specific surface 0.8 to 1.1;
- ratio V2/V1 of from 0.19 to 0.46; and
- ratio DBP oil uptake/CTAB specific surface of from 1.2 to 2.4.

A suitable process for the manufacture of precipitated silica having this set of properties is e.g. described in EP647591A. The polycarboxylic is added at the suitable point during the liquefaction step.

In some instances reacting an alkali silicate with mineral acids at temperatures of from 60 to 95 °C while maintaining the pH at a value in the range of from 7.5 to 10.5 under continuous stirring and continuing the reaction until a solids concentration in the precipitation suspension in the range of from 90 to 120 g/l is achieved, has been found to be advantageous. Thereafter the pH is usually adjusted to a pH of 5 or less, the precipitated silica is filtered, washed, liquefied (with the addition of the polycarboxylic acid as outlined above), and the product is dried and optionally ground or granulated.

In a particularly preferred embodiment, customary commercial sodium water glass may be diluted with water to a pH of 8.0 to 9.0 and concentrated sulfuric acid and the same water glass solution may simultaneously be added to this diluted water glass solution while maintaining the pH value at a constant level. Simultaneous addition of water glass solution and sulfuric acid may be performed over a period of up to 160 minutes, preferably of greater than 90 minutes, in particular within 30 to 90 minutes.

Another preferred group of precipitated silicas in accordance with the present invention has a BET specific surface of at least 135 m²/g and a CTAB surface of at least 75 m²/g with the ratio thereof (BET/CTAB) being at least 1.7.

Another preferred group of silicas has a set of properties as described in US2011/0021801 and precipitated silicas in accordance with the present invention can be obtained in accordance with a process as described in this document with a polycarboxylic acid or mixtures thereof being added during or after the liquefaction step which forms part of the process as described in US2011/0021801.

A preferred process described in the reference comprises the following steps:
a) initially charging an aqueous solution of an alkali metal or alkaline earth metal silicate and/or an organic and/or inorganic base,
b) simultaneously metering at least one alkali metal and/or alkaline earth metal silicate and at least one acidifier into this initial charge with stirring at 75 to 88° C. for 60 to 120, preferably 70 to 90, minutes,
c) optionally continuing the addition of the acidifier used in step b) and/or of another acidifier, with the same or a different metering rate from that in step b), until a pH of the precipitate suspension of 7 to 10 has been attained and continuing to stir the resulting suspension at this pH for 40 to 80 minutes, at high temperatures of 80 to 98° C,
d) reacidifying with at least one acidifier to a pH of about 5 to 8,
e) reacidifying with at least one acidifier to a pH of 4 to 5, the metering rate of the acidifier being less than in step d),
f) filtering the precipitate suspension,
g) washing the filter cake,
h) liquefying the filter cake,
i) drying the filter cake and, optionally,
j) grinding and or granulating.

Another type of preferred silica in accordance with the present invention is obtained as described in WO 98/50306 with the filter cake obtained as described therein being subjected to a liquefaction step during or after which a polycarboxylic acid or a mixture thereof is added as described herein.

The process of WO 98/50306 involves adding acid to a mixture of water and an alkaline metal silicate at about 60-90°C. The water and/or silicate can be heated separately or after they are combined. The alkaline metal silicate used is not particularly limited, and can include meta- and disilicates of any alkali metal or alkaline earth metal. The silicate preferably has a mole ratio of about 2.4-3.3, and is preferably added as an aqueous solution having a silicate concentration of about 10.0-30.0%. An electrolyte may also be added to the reaction medium or combined with one or more of the reactants before or as they are added to the reaction medium. An electrolyte may also be added anytime during the synthesis process through digestion, preferably in the first half of the reaction. Any known electrolyte may be used, with sodium sulfate being preferred.

The acid addition is conducted at a substantially constant rate. The acid is preferably added as a solution of about 5.0-30.0%. Sulfuric acid is preferably used, but other acids such as H₃PO₄, HNO₃, HCl, HCO₂H, CH₃CO₂H and carbonic acid may be successfully employed.

When the pH of the reaction mixture reaches about 10.0-6.5, preferably 7.8-7.5, more silicate is added to the reaction mixture while the acid addition continues. Precipitation occurs during the simultaneous addition, and the precipitation pH is maintained at about 10.0-6.5, preferably at about 7.7-7.3 by adjusting the acid addition rate. The silicate addition is discontinued after about 0-60 minutes, while the acid addition continues until a reaction mixture pH of about 4.5-6.5, preferably about 5.1-5.5 is achieved.

After terminating the acid addition, the reaction mixture is allowed to digest for about 0-60 minutes at a temperature of about 60-99°C. An electrolyte, such as sodium sulfate, may be added at any point in synthesis through the digestion step. After digestion, the reaction mixture pH is readjusted with acid to about 4.5-6.5, preferably to about 5.1-5.5.

The resulting silica suspension is then filtered from the reaction mixture and subjected to a liquefaction step as described. hereinbefore. Thereafter the liquefied filter cake may be washed. Filtration as used herein includes any separation means known in the art, such as rotary filtration, press filtration, pressure filtration, plate and frame filtration, and others. The washing is performed preferably until the sodium sulfate content is less than about 4.5%. Before drying, the pH of the washed silica slurry is preferably readjusted to about 6.0-7.0 with acid. The washed silica slurry is then dried to a silica product. Drying can be accomplished by wheel spray drying, nozzle spray drying, flash drying, rotary drying, or any other drying means known in the art. Preferably, drying is performed until the moisture content of the silica product is about 8% or less.

The silica product can then, if desired, be placed in a low dust/readily dispersible form by any forming process such as granulation, pelletization, and/or other known forming means. A granulation process is preferred where the silica product is compressed into compacted bodies, the bodies then being broken into smaller particles.

The foregoing processes comprise the addition of the at least one polycarboxylic acid or mixtures thereof during the synthesis of the precipitated silica to achieve the desired content of polycarboxylic acid or carboxylate groups.

As an alternative possibility to obtain the precipitated silica in accordance with the present invention, an impregnation process may be mentioned, wherein a commercially available silica with the required physico-chemical properties as defined is provided and at least one polycarboxylic acid is adsorbed on said silica.

The silica in this process embodiment may be precipitated silica, pyrogenic silica or silica partially dehydroxylated by calcining or surface treatment.

In a preferred embodiment the silica is precipitated silica, wherein the expression "precipitated silica" is used to refer to a synthetic amorphous silica typically obtained by a process wherein a silicate, such as the silicate of an alkaline metal, is precipitated with an acidifying agent.

Notable, non-limiting examples of suitable processes for the preparation of precipitated silica are disclosed for instance in EP520862A, EP670813A, EP670814A, EP901986A, EP762992A, EP762993A, EP917519A, EP983966A, EP1355856A, WO03/016215, WO2009/112458, WO2011/117400.

Mention may be made for instance of the following commercially available precipitated silicas:

Zeosil® 1165MP, Zeosil® 1115MP, Zeosil® Premium 200MP, Zeosil® 1085GR, Zeosil® 195HR, Zeosil® 165GR, Zeosil® 115GR, Zeosil® HRS 1200MP, Zeosil® 195GR, Zeosil® 185GR, Zeosil® 175GR, Zeosil® 125GR (all commercially available from Solvay), Ultrasil® 5000GR, Ultrasil® 7000GR, Ultrasil® 9000GR, Ultrasil® VN3GR, Hi-Sil® EZ 160G-D, Hi-Sil® EZ 150G, Hi-Sil® 190G, Hi-Sil® 200G-D, Hi-Sil® HDP-320G, Hi-Sil® 255CG-D, Zeopol® 8755LS, Zeopol® 8745, Newsil® 115GR, Newsil® 2000MP, Tokusil® 315.

Adsorption may be conveniently carried out according to any means known in the art.

In an embodiment of the aforementioned process, adsorption is obtained by impregnating granules or beads of the precipitated silica with the at least one polycarboxylic acid in the liquid state or in a form in which it is dispersed or in solution in a solvent.

The step of impregnating the granules or beads with the at least one polycarboxylic acid may be carried out using any suitable equipment. For instance, the liquid polycarboxylic acid or its dispersion or solution may be sprayed onto the silica maintained under suitable agitation. A mixer or internal blender or a blender of the Brabender type may be used for the impregnation.

After the liquid polycarboxylic acid or its dispersion or solution has been contacted with the silica, drying may be optionally carried out. Drying may be particularly be advantageous when the at least one polycarboxylic acid is under the form of a dispersion or solution in a liquid carrier, either aqueous or organic. In this latter case the solvent is typically removed by evaporation.

At the end of the process described above, at least one polycarboxylic acid is adsorbed on the silica. All definitions and preferences in respect of the polycarboxylic acids provided above for the first process of preparing the silica of the invention equally apply to the alternative process.

The precipitated silica according to the present invention or (capable of being) obtained by the process described above according to the invention can be used in numerous applications.

The inventive precipitated silica can be employed, for example, as catalyst support, as absorbent for active materials (in particular support for liquids, especially used in food, such as vitamins (vitamin E) or choline chloride), in polymer, especially elastomer, compositions, as viscosifying, texturizing or anticaking agent, as battery separator component, or as additive for toothpaste, concrete or paper.

However, the inventive precipitated silica finds a particularly advantageous application in the reinforcement of natural or synthetic polymers. The dynamic and mechanical properties of respective polymer compositions are generally maintained unaltered, when not improved, over those of corresponding polymer compositions comprising precipitated silicas of the prior art.

The polymer compositions in which it can be employed, in particular as reinforcing filler, are generally based on one or more polymers or copolymers, in particular on one or more elastomers, preferably exhibiting at least one glass transition temperature of between -150°C and +300°C, for example between -150°C and +20°C.

The expression "copolymer" is used herein to refer to polymers comprising recurring units deriving from at least two monomeric units of different nature.

Mention may in particular be made, as possible polymers, of diene polymers, in particular diene elastomers.

For example, use may be made of polymers or copolymers deriving from aliphatic or aromatic monomers, comprising at least one unsaturation (such as, in particular, ethylene, propylene, butadiene, isoprene, styrene, acrylonitrile, isobutylene or vinyl acetate), polybutyl acrylate, or their mixtures; mention may also be made of functionalized elastomers, that is elastomers functionalized by chemical groups positioned along the macromolecular chain and/or at one or more of its ends (for example by functional groups capable of reacting with the surface of the silica), and halogenated polymers. Mention may be made of polyamides.

The polymer (copolymer) can be a bulk polymer (copolymer), a polymer (copolymer) latex or else a solution of polymer (copolymer) in water or in any other appropriate dispersing liquid.

Among diene elastomers mention may be made, for example, of polybutadienes (BRs), polyisoprenes (IRs), butadiene copolymers, isoprene copolymers, or their mixtures, and in particular styrene/butadiene copolymers (SBRs, in particular ESBRs (emulsion) or SSBRs (solution)), isoprene/butadiene copolymers (BIRs), isoprene/styrene copolymers (SIRs), isoprene/butadiene/styrene copolymers (SBIRs), ethylene/propylene/diene terpolymers (EPDMs), and also the associated functionalized polymers (exhibiting, for example, pendant polar groups or polar groups at the chain end, which can interact with the silica).

Mention may also be made of natural rubber (NR) and epoxidized natural rubber (ENR).

The polymer compositions can be vulcanized with sulfur (vulcanisates are then obtained) or crosslinked, in particular with peroxides or other crosslinking systems (for example diamines or phenolic resins).

In general, the polymer compositions additionally comprise at least one (silica/polymer) coupling agent and/or at least one covering agent; they can also comprise, inter alia, an antioxidant.

Use may in particular be made, as coupling agents, as nonlimiting examples, of "symmetrical" or "unsymmetrical" silane polysulfides; mention may more particularly be made of bis((C₁-C₄)alkoxyl(C₁-C₄)alkylsilyl(C₁-C₄)alkyl) polysulfides (in particular disulfides, trisulfides or tetrasulfides), such as, for example, bis(3-(trimethoxysilyl)propyl) polysulfides or bis(3-(triethoxysilyl)propyl) polysulfides, such as triethoxysilylpropyl tetrasulfide. Mention may also be made of monoethoxydimethylsilylpropyl tetrasulfide. Mention may also be made of silanes comprising masked or free thiol functional groups.

The coupling agent can be grafted beforehand to the polymer. It can also be employed in the free state (that is to say, not grafted beforehand) or grafted at the surface of the silica. It is the same for the optional covering agent.

The coupling agent can optionally be combined with an appropriate "coupling activator", that is to say a compound which, mixed with this coupling agent, increases the effectiveness of the latter.

The proportion by weight of the inventive silica in the polymer composition can vary within a fairly wide range. It normally represents from 10% to 200%, in particular from 20% to 150%, especially from 20% to 80% (for example from 30% to 70%) or from 80% to 120% (for example from 90% to 110%), of the amount of the polymer(s).

The silica according to the invention can advantageously constitute all of the reinforcing inorganic filler and even all of the reinforcing filler of the polymer composition.

However, this silica according to the invention can optionally be combined with at least one other reinforcing filler, such as, in particular, a commercial highly dispersible silica, such as, for example, Zeosil® Z1165MP or Zeosil® Z1115MP (commercially available from Solvay), a treated precipitated silica (for example, a precipitated silica "doped" using a cation, such as aluminium); another reinforcing inorganic filler, such as, for example, alumina, indeed even a reinforcing organic filler, in particular carbon black (optionally covered with an inorganic layer, for example of silica). The silica according to the invention then preferably constitutes at least 50% by weight, indeed even at least 80% by weight, of the total amount of the reinforcing filler.

The compositions comprising the precipitated silica of the invention may be used for the manufacture of a number of articles. Nonlimiting examples of finished articles comprising at least one of (in particular based on) polymer composition described above (in particular based on the abovementioned vulcanisates), are for instance of footwear soles (preferably in the presence of a (silica/polymer) coupling agent, for example triethoxysilylpropyl tetrasulfide), floor coverings, gas barriers, flame-retardant materials and also engineering components, such as rollers for cableways, seals for domestic electrical appliances, seals for liquid or gas pipes, braking system seals, pipes (flexible), sheathings (in particular cable sheathings), cables, engine supports, battery separators, conveyor belts, transmission belts or, preferably, tires, in particular tire treads (especially for light vehicles or for heavy-goods vehicles (for example trucks)).

### Examples

### Example 1 - Preparation of precipitated silica in accordance with the invention

700 grams of Ultrasil® 7000GR (commercially available from Evonik) was introduced into a vessel with a diameter of 350 mm and a height of 280 mm. A solution of 2-methylglutaric acid with an acid content of approximately 34 wt% was injected into the vessel via a jet stream die at a pressure of 101,325 kPa and at ambient temperature. The methylglutaric acid solution had a content of at least 90 wt% of 2-methylglutaric acid, the remander acid components being ethylsuccinic acid and adipic acid.

The impregnation operation was carried out for 18 min at a stream rate of 2.07 ml/min, corresponding to 1.2 wt% of acid, based on the amount of silica introduced.

### Example 2 - Elastomeric composition comprising the product of Example 1

In an internal Brabender mixer (380 ml volume) the compositions set forth in Table 1 were prepared. The amounts given are in parts by weight

**Table 1**

| Composition | Comparative Example 1 | Example 2 |
|---|---|---|
| SBR (1) | 103 | 103 |
| BR (2) | 25 | 25 |
| Silica (3) | 80 | |
| Silica (4) | | 80 |
| Coupling agent (5) | 6,4 | 6,4 |
| Nytex 4700 (6) | 7 | 7 |
| Carbon black N330 | 3 | 3 |
| ZnO | 2,5 | 2,5 |
| Stearic acid | 2 | 2 |
| Antioxydant (7) | 1,9 | 1,9 |
| DPG (8) | 1,5 | 1,5 |
| CBS (9) | 2 | 2 |
| Sulfur | 1,1 | 1,1 |

| | | |
|---|---|---|
| (1) Styrene butadiene rubber solution (Buna VSL 5025-2, obtained from Lanxess) with 50+/-4% vinyl groups, 25+/-2 % styrene groups and a glass transition temperature of -20°C. 100 parts of SBR comprised 37.5+/-2.8% of oil (2)Butadiene rubber (Buna CB 25, obtained from Lanxess) (3) Ultrasil® 7000GR, obtained from Evonik (4) Product obtained in Example 1 (5)TESPT (LUVOMAXX TESPT), a sulphur silane coupling agent obtained from Lehman & Voss France Sarl) (6) Naphthenic plasticiser oil Nytex 4700, obtained from NynasAB (7) N-1,3-dimethylbutyl-N-phenyl-p-phenylene diamine (Santoflex 6-PPD from Flexsys) (8) Diphenyl guanidine (Rheonogran DPG 80 from Rhein Chemie) (9) N-cyclohexyl-2-benzothiazyl-sulfonamide (Rhenogran CBS-80 from Rhein Chemie) | | |

### Preparation of the rubber compositions

The process for the manufacture of the rubber compositions was carried out in two subsequent preparation steps. The first step was a thermomechanic treatment at elevated temperatures. This step was followed by a second mechanical treatment at temperatures beolw 110°C. This step was used for the addition of the vulcanization system. The first step was realized in an internal mixer of the Brabender type with a capacity of 380 ml and a degree of filling of 0.6. The initial temperature and the rotor speed were in each case adjusted to achieve a starting temperature in the range of from 140 to 160°C. In the first step the elastomers and the reinforcing filler together with the coupling agent and the stearic acid were introduced. This step took 4-10 minutes. After cooling the mixture to a temperature below 100°C, zinc oxyde and the protective agents (e.g. 6-PPD) were introduced within 2 to 5 minutes. In the second step, after cooling to a temperature of less than 100°C the vulcanization system (sulphur plus accelerators) was added through a cylindric mixer preheated to a temperature of 50°C during 2 to 6 minutes. The final composition was calendered to sheets with a thickness of 2-3 mm.

An evaluation of the rheologic properties of the crude mixtures allows optimizing time and temperature of the vulcanization. Thereafter, the mechanical and dynamical properties of the mixtures vulcanized under optimum conditions were determined.

### Viscosity of the crude mixtures

The Mooney viscosity of the crude compositions and the degree of relaxation Mooney were determined at a temperature of 100°C with a MV 2000 rheometer in accordance with NF ISO289. The ML(1+4)-100°C values (preheat time 1 minute and taking of the reading 4 minutes after the rotor had been started is given in Table 2. The measurements were made immediately after mixing and after an aging time of 8 days at a temperature of 23 +/-3°C.

**Table 2**

| Parameter | | Comp. Example 1 | Example 2 |
|---|---|---|---|
| ML (1+4) - 100°C | Initial | 79 | 76 |
| Relaxation Mooney | Initial | 0,303 | 0,318 |
| ML (1+4) - 100°C | After 8 days (23 +/- 3°C) | 86 | 79 |
| Relaxation Mooney | After 8 days (23 +/- 3°C) | 0,290 | 0,315 |

The evaluation of the measurements yielded the following observations:
the precipitated silica in accordance with the present invention led to a reduction of the initial viscosity of the crude mixture compared to the composition with a standard grade silica without acid group content.
Furthermore, the viscosity increase over time of the compositions comprising a silica in accordance with the present invention was lower than with the composition of the comparative examples.

A lower initial viscosity and a reduced viscosity increase over time are valuable improvements for the skilled person.

The compositions in accordance with the present invention showed also improved rheometric properties while maintaining the mechanical properties at the same level as the comparative composition. Scorch time TS2 (an indicator of the time required for the beginning of the crosslinking process) was increased which improves the available handling time of the compositions.

### Example 3

A silica suspension is prepared according to the process described in EP647591A. The suspension of precipitated silica thus obtained is filtered providing a filter cake. The filter cake is subjected to a liquefaction operation in a continuous vigorously stirred reactor in the presence of a solution of 2-methylglutaric acid with an acid content of approximately 34 wt% having a content of at least 90 wt% of 2-methylglutaric acid, the remainder acid components being ethylsuccinic acid and adipic acid. The total amount of the acid mixture added during the liquefaction operation corresponds to 1.2 wt% of acid based on the amount of silica (SiO₂) in the cake. The disintegrated cake is subsequently dried using a nozzle atomizer.

The precipitated silica of Example 3 has a BET surface area of 165-175 m²/g, a CTAB surface area of 155-170 m²/g, a V2/V1 ratio of about 0.47 and a content of carboxylic acid and/or carboxylate groups, expressed as total carbon content, of 0.20 wt% - 0.70 wt%.

## Claims

1. Precipitated silica having:
a BET specific surface in the range of from 35 to 700 m²/g,
a CTAB specific surface in the range of from 30 to 400 m²/g,
a pore volume distribution V₂/V₁ between the pore volume generated by the pores having a diameter of between 175 and 275 Å (V2) and the pore volume generated by the pores with diameters of less than or equal to 400 Å (V1) in the range of from 0.15 to 0.49 , and
a content of polycarboxylic acid and/or corresponding carboxylate groups, expressed as total carbon content, of at least 0.15 wt% wherein said polycarboxylic acid is selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid, traumatic acid, glutaconic acid, malic acid, phthalic acid, ortophthalic acid, isophthalic acid, trimesic acid, trimellitic acid.

2. Precipitated silica in accordance with claim 1 wherein the at least one polycarboxylic acid is selected from the group consisting of malonic acid, tricarballylic acid, glutaric acid, adipic acid, methyladipic acid, pimelic acid, suberic acid, azelaic acid, sebacic acid, methylsuccinic acid, ethylsuccinic acid, methylglutaric acid, dimethylglutaric acid, malic acid.

3. Precipitated silica in accordance with claim 1 or 2 with a DPB oil uptake in the range of from 140 to 350 ml/100g.

4. Precipitated silica in accordance with any of claims 1 to 3 having:
a BET specific surface in the range of from 120 to 300 m²/g,
a CTAB specific surface of from 100 to 300 m²/g,
a ratio BET surface/CTAB surface of from 0.8 to 1.3.

5. Precipitated silica in accordance with any of claims 1 to 3 having:
a BET specific surface of from 35 to 350 m²/g,
a CTAB specific surface of from 30 to 350 m²/g,
a DBP oil uptake in the range of from 150 to 300 ml/100g,
a ratio BET specific surface/CTAB specific surface of from 0.8 to 1.1,
a ratio V₂/V₁ in the range of from 0.19 to 0.46, and
a ratio DPB oil uptake/CTAB specific surface ratio of from 1.2 to 2.4.

6. Precipitated silica in accordance with any of claims 1 to 3 having:
a ratio BET specific surface /CTAB specific surface of at least 1.7 with the BET specific surface area being at least 135 m²/g and the CTAB surface area being at least 75 m²/g.

7. Precipitated silica in accordance with any one of the preceding claims having an aluminium content, measured as Al₂O₃, in the range of from 0.1 to 5.0 wt%.

8. A process for the manufacture of a precipitated silica of any one of the preceding claims or of a precipitated silica suspension, comprising the steps of:
a) reacting at least one silicate with at least one acidifying agent to provide a silica suspension,
b) submitting said silica suspension to filtration to provide a filter cake,
c) submitting said filter cake to a liquefaction step, said liquefaction step being carried out with or without the addition of an aluminium compound to obtain a suspension of precipitated silica, and, optionally
d) drying the precipitated silica obtained after the liquefaction step
wherein at least one polycarboxylic acid is added to the filter cake during or after the liquefaction step;
wherein step a) is performed by precipitating a silicate with a mineral acid at a temperature of from 55 to 95 °C at a pH in the range of from 7 to 14 under continuous stirring until a solids content in the suspension of from 40 to 110 g/l is achieved, thereafter reducing the pH to a value below 5 by the addition of an acid; and
wherein the at least one polycarboxylic acid is selected from the group consisting of malonic acid, tricarballylic acid, glutaric acid, adipic acid, pimelic acid, suberic acid, azelaic acid, sebacic acid, methylsuccinic acid, ethylsuccinic acid, oxalosuccinic acid, methyladipic acid, methylglutaric acid, dimethylglutaric acid, fumaric acid, itaconic acid, muconic acid, aconitic acid,
traumatic acid, glutaconic acid, malic acid, phthalic acid, ortophthalic acid, isophthalic acid, trimesic acid, trimellitic acid.

9. Process in accordance with claim 8 wherein the at least one polycarboxylic acid is selected from the group consisting of adipic acid, ethylsuccinic acid, glutaric acid, methylglutaric acid, oxalic acid, or mixtures thereof.

10. A composition of matter comprising a precipitated silica of any one of claims 1 to 7 and an elastomer or a vulcanizable rubber.

11. An article of manufacture, in particular a pneumatic tire or a tire thread comprising a composition in accordance with claim 10.

12. Use of a precipitated silica of any one of claims 1 to 7 in rubber compositions useful for the manufacture of pneumatic tires or tire threads.

## Patentansprüche

1. Präzipitiertes Silica mit :
einer spezifischen BET-Oberfläche in dem Bereich von 35 bis 700 m²/g,
einer spezifischen CTAB-Oberfläche in dem Bereich von 30 bis 400 m²/g,
einer Porenvolumenverteilung V₂/V₁ zwischen dem Porenvolumen, das durch die Poren mit einem Durchmesser von zwischen 175 und 275 Å erzeugt ist (V2), und dem Porenvolumen, das durch die Poren mit einem Durchmesser von kleiner als oder gleich 400 Å erzeugt ist (V1), in dem Bereich von 0,15 bis 0,49 und
einem Gehalt an Polycarbonsäure- und/oder entsprechenden Carboxylatgruppen, ausgedrückt als Gesamtkohlenstoffgehalt, von wenigstens 0,15 Gew.-%, wobei die Polycarbonsäure ausgewählt ist aus der Gruppe bestehend aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methyladipinsäure, Methylglutarsäure, Dimethylglutarsäure, Fumarsäure, Itaconsäure, Muconsäure, Aconitsäure, Traumatinsäure, Glutaconsäure, Äpfelsäure, Phthalsäure, Orthophthalsäure, Isophthalsäure, Trimesinsäure, Trimellitsäure.

2. Präzipitiertes Silica gemäß Anspruch 1, wobei die wenigstens eine Polycarbonsäure ausgewählt ist aus der Gruppe bestehend aus Malonsäure, Tricarballylsäure, Glutarsäure, Adipinsäure, Methyladipinsäure, Pimelinsäure, Suberinsäure, Azelainsäure, Sebacinsäure, Methylbernsteinsäure, Ethylbernsteinsäure, Methylglutarsäure, Dimethylglutarsäure, Äpfelsäure.

3. Präzipitiertes Silica gemäß Anspruch 1 oder 2 mit einer DPB-Ölaufnahme in dem Bereich von 140 bis 350 ml/100 g.

4. Präzipitiertes Silica gemäß einem der Ansprüche 1 bis 3 mit :
einer spezifischen BET-Oberfläche in dem Bereich von 120 bis 300 m²/g,
einer spezifischen CTAB-Oberfläche von 100 bis 300 m²/g,
einem Verhältnis BET-Oberfläche/CTAB-Oberfläche von 0,8 bis 1,3.

5. Präzipitiertes Silica gemäß einem der Ansprüche 1 bis 3 mit :
einer spezifischen BET-Oberfläche von 35 bis 350 m²/g,
einer spezifischen CTAB-Oberfläche von 30 bis 350 m²/g,
einer DBP-Ölaufnahme in dem Bereich von 150 bis 300 ml/100 g,
einem Verhältnis spezifische-BET-Oberfläche/spezifische-CTAB-Oberfläche von 0,8 bis 1,1,
einem Verhältnis V₂/V₁ in dem Bereich von 0,19 bis 0,46 und
einem Verhältnis DPB-Ölaufnahme/spezifische-CTAB-Oberfläche von 1,2 bis 2,4.

6. Präzipitiertes Silica gemäß einem der Ansprüche 1 bis 3 mit :
einem Verhältnis spezifische-BET-Oberfläche/spezifische-CTAB-Oberfläche von wenigstens 1,7, wobei die spezifische BET-Oberfläche wenigstens 135 m²/g beträgt und die CTAB-Oberfläche wenigstens 75 m²/g beträgt.

7. Präzipitiertes Silica gemäß einem der vorstehenden Ansprüche mit einem Aluminiumgehalt, gemessen als Al₂O₃, in dem Bereich von 0,1 bis 5,0 Gew.-%.

8. Verfahren zum Herstellen eines präzipitierten Silicas gemäß einem der vorstehenden Ansprüche oder einer Suspension von präzipitiertem Silica, umfassend die Schritte :
a) Umsetzen wenigstens eines Silicats mit wenigstens einem Säuerungsmittel, um eine Silicasuspension zu erhalten,
b) Unterwerfen der Silicasuspension an Filtration, um einen Filterkuchen zu erhalten,
c) Unterwerfen des Filterkuchens an einen Verflüssigungsschritt, wobei der Verflüssigungsschritt mit oder ohne Zugabe einer Aluminiumverbindung durchgeführt wird, um eine Suspension von präzipitiertem Silica zu erhalten, und gegebenenfalls
d) Trocknen des nach dem Verflüssigungsschritt erhaltenen präzipitierten Silicas,
wobei während oder nach dem Verflüssigungsschritt wenigstens eine Polycarbonsäure zu dem Filterkuchen zugegeben wird;
wobei Schritt a) durch Präzipitieren eines Silicats mit einer Mineralsäure bei einer Temperatur von 55 bis 95°C bei einem pH-Wert in dem Bereich von 7 bis 14 unter ständigem Rühren bis ein Feststoffgehalt in der Suspension von 40 bis 110 g/l erreicht ist, anschließend Verringern des pH-Werts durch Zugeben einer Säure auf einen Wert von unter 5 durchgeführt wird, und
wobei die wenigstes eine Polycarbonsäure ausgewählt ist aus der Gruppe bestehend aus Malonsäure, Tricarballylsäure, Glutarsäure, Adipinsäure, Pimelinsäure, Suberinsäure, Azelainsäure, Sebacinsäure, Methylbernsteinsäure, Ethylbernsteinsäure, Oxalbernsteinsäure, Methyladipinsäure, Methylglutarsäure, Dimethylglutarsäure, Fumarsäure, Itaconsäure, Muconsäure, Aconitsäure, Traumatinsäure, Glutaconsäure, Äpfelsäure, Phthalsäure, Orthophthalsäure, Isophthalsäure, Trimesinsäure, Trimellitsäure.

9. Verfahren gemäß Anspruch 8, wobei die wenigstens eine Polycarbonsäure ausgewählt ist aus der Gruppe bestehend aus Adipinsäure, Ethylbernsteinsäure, Glutarsäure, Methylglutarsäure, Oxalsäure und Gemischen davon.

10. Stoffzusammensetzung, umfassend ein präzipitiertes Silica gemäß einem der Ansprüche 1 bis 7 und ein Elastomer oder einen vulkanisierbaren Kautschuk.

11. Erzeugnis, insbesondere ein pneumatischer Reifen oder eine Reifenlauffläche, umfassend eine Zusammensetzung gemäß Anspruch 10.

12. Verwendung eines präzipitierten Silicas gemäß einem der Ansprüche 1 bis 7 in Kautschukzusammensetzungen, die für die Herstellung von pneumatischen Reifen oder Reifenlaufflächen verwendbar sind.

## Revendications

1. Silice précipitée ayant :
une surface spécifique BET dans la plage de 35 à 700 m²/g,
une surface spécifique CTAB dans la plage de 30 à 400 m²/g,
une distribution du volume poreux V₂/V₁ entre le volume poreux généré par les pores ayant un diamètre compris entre 175 et 275 Å (V₂) et le volume poreux généré par les pores ayant des diamètres inférieurs ou égaux à 400 Å (V₁) dans la plage de 0,15 à 0,49 et
une teneur en groupes acide polycarboxylique et/ou carboxylate correspondants, exprimée sous forme de teneur en carbone total, d'au moins 0,15 % en poids dans laquelle ledit acide polycarboxylique est choisi dans le groupe constitué par l'acide malonique, l'acide tricarballylique, l'acide glutarique, l'acide adipique, l'acide pimélique, l'acide subérique, l'acide azélaïque, l'acide sébacique, l'acide méthylsuccinique, l'acide éthylsuccinique, l'acide oxalosuccinique, l'acide méthyladipique, l'acide méthylglutarique, l'acide diméthylglutarique, l'acide fumarique, l'acide itaconique, l'acide muconique, l'acide aconitique, l'acide traumatique, l'acide glutaconique, l'acide malique, l'acide phtalique, l'acide orthophtalique, l'acide isophtalique, l'acide trimésique, l'acide trimellitique.

2. Silice précipitée selon la revendication 1 dans laquelle l'au moins un acide polycarboxylique est choisi dans le groupe constitué par l'acide malonique, l'aide tricarballylique, l'acide glutarique, l'acide adipique, l'acide méthyladipique, l'acide pimélique, l'acide subérique, l'acide azélaïque, l'acide sébacique, l'acide méthylsuccinique, l'acide éthylsuccinique, l'acide méthylglutarique, l'acide diméthylglutarique, l'acide malique.

3. Silice précipitée selon la revendication 1 ou 2 ayant une absorption d'huile de DPB dans la plage de 140 à 350 ml/100 g.

4. Silice précipitée selon l'une quelconque des revendications 1 à 3 ayant :
une surface spécifique BET dans la plage de 120 à 300 m²/g,
une surface spécifique CTAB de 100 à 300 m²/g,
un rapport surface BET/surface CTAB de 0,8 à 1,3.

5. Silice précipitée selon l'une quelconque des revendications 1 à 3 ayant :
une surface spécifique BET de 35 à 350 m²/g,
une surface spécifique CTAB de 30 à 350 m²/g,
une absorption d'huile de DBP dans la plage de 150 à 300 ml/100 g,
un rapport surface spécifique BET/surface spécifique CTAB de 0,8 à 1,1,
un rapport V₂/V₁ dans la plage de 0,19 à 0,46 et
un rapport absorption d'huile de DPB/surface spécifique CTAB de 1,2 à 2,4.

6. Silice précipitée selon l'une quelconque des revendications 1 à 3 ayant :
un rapport surface spécifique BET/surface spécifique CTAB d'au moins 1,7, la surface spécifique BET étant d'au moins 135 m²/g et la surface CTAB étant d'au moins 75 m²/g.

7. Silice précipitée selon l'une quelconque des revendications précédentes ayant une teneur en aluminium, mesurée en termes d'Al₂O₃, dans la plage de 0,1 à 5,0 % en poids.

8. Procédé pour la fabrication d'une silice précipitée selon l'une quelconque des revendications précédentes ou d'une suspension de silice précipitée, comprenant les étapes consistant à :
a) faire réagir au moins un silicate avec au moins un agent acidifiant pour fournir une suspension de silice,
b) soumettre ladite suspension de silice à une filtration pour fournir un gâteau de filtration,
c) soumettre ledit gâteau de filtration à une étape de liquéfaction, ladite étape de liquéfaction étant effectuée avec ou sans l'ajout d'un composé de l'aluminium pour obtenir une suspension de silice précipitée, et, éventuellement
d) faire sécher la silice précipitée obtenue après l'étape de liquéfaction ;
dans lequel au moins un acide polycarboxylique est ajouté au gâteau de filtration pendant ou après l'étape de liquéfaction ;
dans lequel l'étape a) est effectuée par la précipitation d'un silicate avec un acide minéral à une température de 55 à 95°C à un pH dans la plage de 7 à 14 sous agitation continue jusqu'à ce qu'une teneur en matières solides de 40 à 110 g/l dans la suspension soit atteinte, après cela l'abaissement du pH à une valeur au-dessous de 5 par l'ajout d'un acide ; et
dans lequel l'au moins un acide polycarboxylique est choisi dans le groupe constitué par l'acide malonique, l'acide tricarballylique, l'acide glutarique, l'acide adipique, l'acide pimélique, l'acide subérique, l'acide azélaïque, l'acide sébacique, l'acide méthylsuccinique, l'acide éthylsuccinique, l'acide oxalosuccinique, l'acide méthyladipique, l'acide méthylglutarique, l'acide diméthylglutarique, l'acide fumarique, l'acide itaconique, l'acide muconique, l'acide aconitique, l'acide traumatique, l'acide glutaconique, l'acide malique, l'acide phtalique, l'acide orthophtalique, l'acide isophtalique, l'acide trimésique, l'acide trimellitique.

9. Procédé selon la revendication 8 dans lequel l'au moins un acide polycarboxylique est choisi dans le groupe constitué par l'acide adipique, l'acide éthylsuccinique, l'acide glutarique, l'acide méthylglutarique, l'acide oxalique ou les mélanges de ceux-ci.

10. Composition de matière comprenant une silice précipitée de l'une quelconque des revendications 1 à 7 et un élastomère ou un caoutchouc vulcanisable.

11. Article manufacturé, en particulier un pneumatique ou une bande de roulement de pneu comprenant une composition selon la revendication 10.

12. Utilisation d'une silice précipitée de l'une quelconque des revendications 1 à 7 dans des compositions de caoutchouc utiles pour la fabrication de pneumatiques ou de bandes de roulement de pneus.
